# EUROPÄISCHE PATENTSCHRIFT

(11) **EP 1 122 464 B1**
(45) Veröffentlichungstag und Bekanntmachung des Hinweises auf die Patenterteilung: **31.03.2004**
(21) Anmeldenummer: 01100678.0
(22) Anmeldetag: 11.01.2001
(51) Int. Cl.: F16H 7/12, F02B 67/06

(54) **Spannvorrichtung für ein biegsames Antriebselement**
Tensioner for a flexible drive element
Dispositif tendeur pour un élément souple de transmission

(30) Priorität: 12.01.2000 DE 10000970
(43) Veröffentlichungstag der Anmeldung: 08.08.2001
(73) Patentinhaber: Litens Automotive GmbH, 63571 Gelnhausen (DE)
(72) Erfinder: Guhr, Wolfgang, 64584 Grundau (DE)
(74) Vertreter: Grünecker, Kinkeldey, Stockmair & Schwanhäusser Anwaltssozietät

(56) Entgegenhaltungen:
- DE-A- 19 822 632
- GB-A- 156 687
- US-A- 4 416 647
- US-A- 4 758 208
- PATENT ABSTRACTS OF JAPAN vol. 010, no. 044 (M-455), 21. Februar 1986 (1986-02-21) & JP 60 196457 A (DAIDO TOKUSHUKO KK), 4. Oktober 1985 (1985-10-04)

## Beschreibung

Die Erfindung betrifft eine Spannvorrichtung der im Oberbegriff des Patentanspruchs 1 angegebenen Art.

Aus der gattungsbildenden US 4 758 208 A ist es bekannt, den Verbrennungskraftmotor nicht mehr wie üblich mit dem Startantriebsmotor über ein Starterritzel am Schwungrad zu starten, sondern den Startantriebsmotor in den Generator einzugliedem (Startergenerator oder häufig nur Stargen genannt), und den Verbrennungskraftmotor über den Riementrieb an der Kurbelwelle zu starten. Beim Starten ergibt sich eine Änderung der bisher üblichen kinematischen Verhältnisse im Riementrieb, weil dann der Startantriebsmotor vorübergehend die Kurbelwelle schleppt. Mit dem relativ hohen und schlagartig einsetzenden Drehmoment des Startantriebsmotors kommt es zu unerwünschten Riemenschlupf und zu Riemenschwingungen. Selbst zwei an zwei getrennten, um die Achse des Startergenerators gegen Federkraft schwenkbaren Spannarmen angeordnete Spannrollen an beiden Seiten des Startergenerators können dieses Problem nicht zufriedenstellend lösen. Bei der bekannten Ausbildung wird die jeweils an der Zugtrumseite des Startergenerators arbeitende Spannrolle mit ihrem Spannarm mechanisch blockiert, so dass nur noch die andere Spannrolle ausschließlich unter der Federbelastung spielt.

Bei einer aus US 4 416 647 A bekannten Spannvorrichtung für den Riementrieb eines Verbrennungskraftmotors sind an einem zweiarmigen Spannarm eine erste Spannrolle und eine zweite Spannrolle angeordnet, die den Riemen von der Außenseite des Riementriebs her an beiden Seiten der Riemenscheibe eines Klimakompressors beaufschlagen, um eine Riemenspannfunktion zu erzeugen und durch die zyklische Last des Klimakompressors bewirkte Schwingungen an der Leertrumseite des Klimakompressors zu dämpfen. Der im Riementrieb angeordnete Generator wird permanent von der Kurbelwelle geschleppt. Der Klimakompressor erzeugt ein weitgehend gleichbleibendes oder zyklisch variierendes Schleppmoment, je nachdem, ob der Klimakompressor leer läuft oder arbeitet.

Der Erfindung liegt die Aufgabe zugrunde, eine baulich einfache Spannvorrichtung der eingangs genannten Art so in einen Trieb eines einen Startergenerator aufweisenden Verbrennungskraftmotors einzugliedem, dass trotz sich wegen des Startergenerators ändernder kinematischer Verhältnisse im Trieb Schlupf und unerwünscht starke Schwingungen des Antriebselements vermieden werden.

Die gestellte Aufgabe wird mit den Merkmalen des Patentanspruchs 1 gelöst.

Zweckmäßigerweise dient die zweite Spannrolle in dem einen mit dem Generator baulich kombinierten, wahlweise aktivierbaren Startantriebsmotor enthaltenden Trieb als im Antriebselement an der Zugtrumseite des aktivierten Startantriebsmotors angeordnete Startspannrolle, die unter der hohen, vom Startantriebsmotor in das Antriebselement eingeleiteten und die Kurbelwelle schleppenden Leistung einen Schlupf bzw. unerwünscht starkes Schwingen des Antriebselements verhindert. Die Spannvorrichtung ist besonders für einen Riementrieb geeignet, dessen Antriebselement wenigstens ein Keilriemen, ein Rillenriemen oder ein Zahnriemen ist; sie kann jedoch auch bei einem Kettentrieb mit Kettenrädern zweckmäßig sein. An beiden Spannrollen wird das Antriebselement stabilisiert und gespannt. Die gegensinnigen Momente des Momentanpaares variieren relativ zueinander in Abhängigkeit davon, ob die erste Spannrolle oder die zweite Spannrolle gerade stärker vom Antriebselement beaufschlagt wird. Da beide Momente über die Schwenklagerung gehen, stützen sich beide Spannrollen gegenseitig ab, wodurch ein stabiler Lauf des Antriebselements auch bei sich ändernden kinematischen Verhältnissen im Trieb erzielt wird. Die kinematischen Verhältnisse ändern sich, wenn der kombinierte Generator/Starter zum Starten des Verbrennungskraftmotors die Kurbelwelle schleppt, während bei normalem Motorlauf die Kurbelwelle den Generator schleppt. Die beiden Spannrollen helfen einander, weil ein Nachgeben der einen Spannrolle zu einer Spannbewegung der anderen Spannrolle führt. Da die Motorbetriebsphasen im Regelfall länger dauern als die Startphasen, hat die erste Spannrolle an der Zugtrumseite der treibenden Kurbelwelle einen längeren Hebel um die Schwenklagerung als die zweite Spannrolle. Dann ist das Spannvermögen der ersten Spannrolle (Funktion aus Hebelarm und Umschlingungswinkel) immer größer als das Spannvermögen der zweiten Spannrolle.

Der Effekt, bei stärkerer Beaufschlagung einer Spannrolle die andere Spannrolle mit zunehmender Kraft in das Antriebselement zu drücken, lässt sich mit unterschiedlichen geometrischen Konzepten erreichen. Die Achsen der Spannrollen können an derselben Seite oder an sich gegenüberliegenden Seiten der Schwenklagerung angeordnet sein, und/oder auf einer durch die Schwenklagerung gehenden Geraden liegen oder auf miteinander einen Winkel einschließenden Verbindungslinien zwischen den Achsen und der Schwenklagerung. Die gewählte Geometrie wird auf den Verlauf des Antriebselementes im Trieb abgestimmt und auch im Hinblick darauf, dass die Spannvorrichtung wenig Platz beansprucht und an einer optimalen Position innerhalb des Triebs wirkt.

Die erste Spannrolle muss ein höheres Spannvermögen als die zweite Spannrolle haben, damit Längenänderungen des Antriebselementes effektiv kompensiert werden, und auch der Längenzuwachs geschluckt wird, der sich bei Nachgeben der zweiten Spannrolle ergibt. Wenn beispielsweise die erste Spannrolle 5,5 mm Längung des Antriebselementes ausgleicht, sollte die zweite Spannrolle nur eine wesentlich geringere Längung einbringen, z.B. nur 1 mm. Das Verhältnis zwischen den Spannvermögen zugunsten der ersten Spannrolle sollte nicht kleiner sein als 4:1. Dies lässt sich auf baulich einfache Weise durch Abstimmung der voneinander unterschiedlichen Hebelarme der Spannrolle erzielen, wobei die Hebelarme in einem Verhältnis von mindestens 4:1 stehen sollten, zweckmäßigerweise von ca. 5,5:1.

Günstig ist es, für beide Spannrollen zumindest in etwa gleiche Wirkdurchmesser vorzusehen, und das Antriebselemente so durch die Spannvorrichtung zu führen, dass an beiden Spannrollen zumindest in einer Nominalstellung des Spannarms in etwa gleiche Umschlingungswinkel vorliegen.

Eine Federvorspannung der Spannvorrichtung wird so eingestellt, dass die erste, das höhere Spannvermögen erbringende Spannrolle in Spannrichtung beaufschlagt ist.

Um Schwingungen des Antriebselements wirksam abzudämpfen und Schlupf zu vermeiden, kann eine Rotationsdämpfung in der Schwenklagerung vorteilhaft sein.

Um bei nicht auszuschließenden Extremverhältnissen Schäden im Trieb zu vermeiden, sollte der Spannarm einen begrenzten Gesamtschwenkwinkel haben, innerhalb dessen er sein Arbeitsspiel ausführt. Ein Gesamtschwenkwinkel von ca. 30° ist zweckmäßig. Wird der Gesamtschwenkwinkel in der Entspann-Schwenkrichtung durch einen Montageanschlag begrenzt, dann lässt sich das Antriebselement bequem einbauen bzw. ausbauen.

Anhand der Zeichnung werden Ausführungsformen des Erfindungsgegenstandes erläutert. Es zeigen:
- Fig. 1 bis 3: drei unterschiedliche Ausführungsformen einer Spannvorrichtung,
- Fig. 4: einen Achsschnitt durch die Schwenklagerung der Spannvorrichtung,
- Fig. 5: eine schematische Ansicht eines Triebs eines Verbrennungskraftmotors, wobei der Trieb zumindest einen mit einem Startantriebsmotor baulich vereinigten Generator mit der Kurbelwelle verbindet und die Spannvorrichtung der Ausführungsform von Fig. 1 verwendet ist, und
- Fig. 6: eine schematische Ansicht eines Triebs einer anderen Ausführungsform, ebenfalls mit einem Starter/Generator, und mit der Spannvorrichtung der Ausführungsform von Fig. 2.

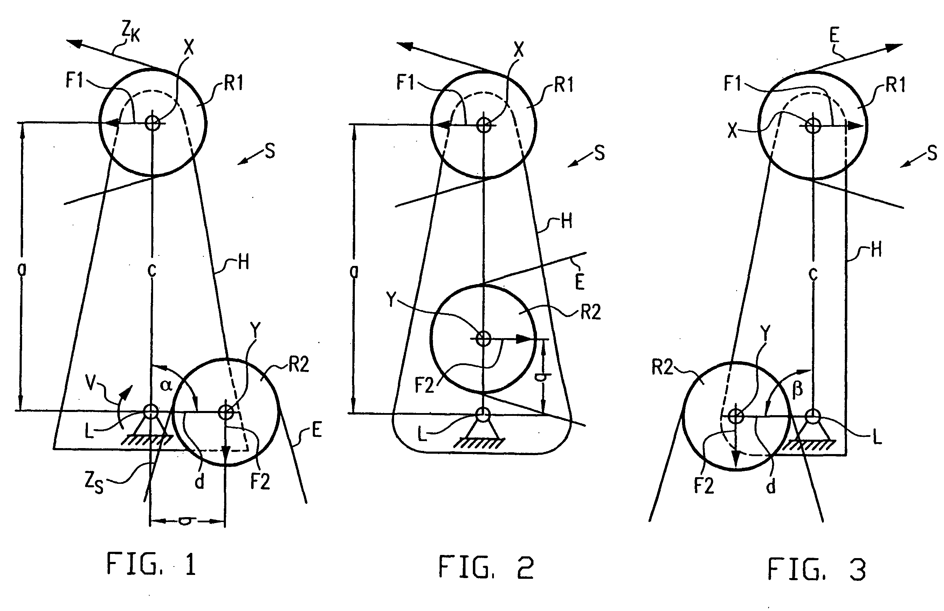

Eine Spannvorrichtung S in den Fig. 1, 2 und 3, d.h. ein sogenannter Riemenspanner, für den Riemen eines Riementriebs eines Verbrennungskraftmotors weist einen Spannarm H auf, der in einer stationären Schwenklagerung L schwenkbar abgestützt ist. Der Verbrennungskraftmotor treibt über seine Kurbelwelle mehrere Sekundärkomponenten, wie beispielsweise einen Klimakompressor, eine Wasserpumpe, einen Starter/Generator, usw.. An dem Spannarm H sind an Achse X, Y eine erste Spannrolle R1 und eine zweite Spannrolle R2 angeordnet. Der Hebelarm a der Achse X ist erheblich länger als der Hebelarm b der Achse Y, jeweils bezogen auf die Schwenklagerung L. Die Verbindungslinie c zwischen der Achse X und der Schwenklagerung L schließt mit der Verbindungslinie d zwischen der Achse Y und der Schwenklagerung L einem spitzen Winkel a ein, der nahe bei 90° liegen kann. Beide Spannrollen R1, R2 werden vom selben Antriebselement E, beispielsweise einem Riemen oder einer Kette, beaufschlagt, wobei zweckmäßigerweise das Antriebselement E an beiden Spannrollen R1, R2 in etwa den gleichen Umschlingungswinkel formt. Die erste Spannrolle R1 wird an der Zugrumseite ZK der in Fig. 1 nicht gezeigten Kurbelwelle angeordnet (bei treibender Kurbelwelle) und ist mit einer Umschlingungs-Resultierenden F1 entgegen dem Uhrzeigersinn um das Schwenklager L beaufschlagt. Die zweite Spannrolle R2 wird an der Zugtrumseite ZS des in Fig. 1 nicht gezeigten Starter/Generators (bei treibendem Startantriebsmotor) angeordnet und ist mit einer Umschlingungs-Resultierenden F2 im Uhrzeigersinn um die Schwenklagerung L beaufschlagt. Die resultierenden F1, F2 bilden ein gegensinniges Momentenpaar. Der Spannarm H wird durch eine Federvorspannvorrichtung V im Uhrzeigersinn um die Schwenklagerung L beaufschlagt. Gegebenenfalls ist in der Schwenklagerung L eine Rotationsdämpfung vorgesehen. Das Verhältnis der Hebelarme b:a sollte mindestens ca. 1:4 betragen, liegt zweckmäßigerweise bei ca. 1:5,5, oder zwischen ca. 1:4,5 und 1:6,5.

Hat die erste Spannrolle R1 eine Längung des Antriebselementes E auszugleichen, dann verschwenkt der Spannarm H unter der Vorspannung im Uhrzeigersinn. Die zweite Spannrolle R2 folgt dieser Bewegung. Da jedoch der Hebelarm b wesentlich kürzer als der Hebelarm a, ist die von der zweiten Spannrolle R2 bei dieser Bewegung im Antriebselement freigegebene Länge wesentlich kürzer als die von der ersten Spannrolle R1 ausgeglichene Längung. Die erste Spannrolle R1 hat demzufolge ein höheres Spannvermögen als die zweite Spannrolle R2. Wird die erste Spannrolle R1 durch einen momentan anwachsende Zugkraft an der Zugtrumseite ZK der treibenden Kurbelwelle entgegen dem Uhrzeigersinn verlagert, dann stützt sie sich an der Federvorspannung und über die zweite Spannrolle R2 am Antriebselement E ab. Umgekehrt wird bei einer momentan anwachsenden Zugkraft an der Zugtrumseite ZS des treibenden Starter/Generators die Umschlingungs-resultierende F2 größer und tendiert der Spannarm H zum Schwenken im Uhrzeigersinn. Dabei stützt sich die erste Spannrolle R1 zunehmend am Antriebselement E ab. Auf diese Weise wird bei sich ändernden kinematischen Verhältnissen (es treibt entweder die Kurbelwelle oder der Startantriebsmotor des Starter/Generators) im Trieb eine moderate Spielbewegung des Spannarms H gewährleistet, wobei stets das hohe Spannvermögen der ersten Spannrolle R1 erhalten bleibt und das Antriebselement E gespannt wird.

In Fig. 2 sind die Achsen X, Y auf einer gemeinsamen, durch die Schwenklagerung L gehenden Geraden an derselben Seite der Schwenklager L angeordnet, wobei die Hebelarme a und b deutlich voneinander verschieden sind. In Fig. 2 sind die Umschlingungswinkel an beiden Spannrollen R1, R2 größer als in Fig. 1. Die Umschlingungs-Resultierenden F1, F2 bilden in bezug auf die Schwenklagerung L ein gegensinniges Kräfte- oder Momentenpaar.

In Fig. 3 sind die Achsen X, Y an sich gegenüberliegenden Seiten der Schwenklagerung L positioniert. Die Hebelarme a, b der Achsen X, Y sind deutlich voneinander verschieden. Die Verbindungslinien der Achsen X, Y mit dem Schwenklager L schließen beispielsweise einen stumpfen Winkel β ein. Es wäre denkbar, die an sich gegenüberliegenden Seiten der Schwenklagerung L angeordneten Achsen X, Y auf einer durch die Schwenklagerung L gehenden Geraden anzuordnen.

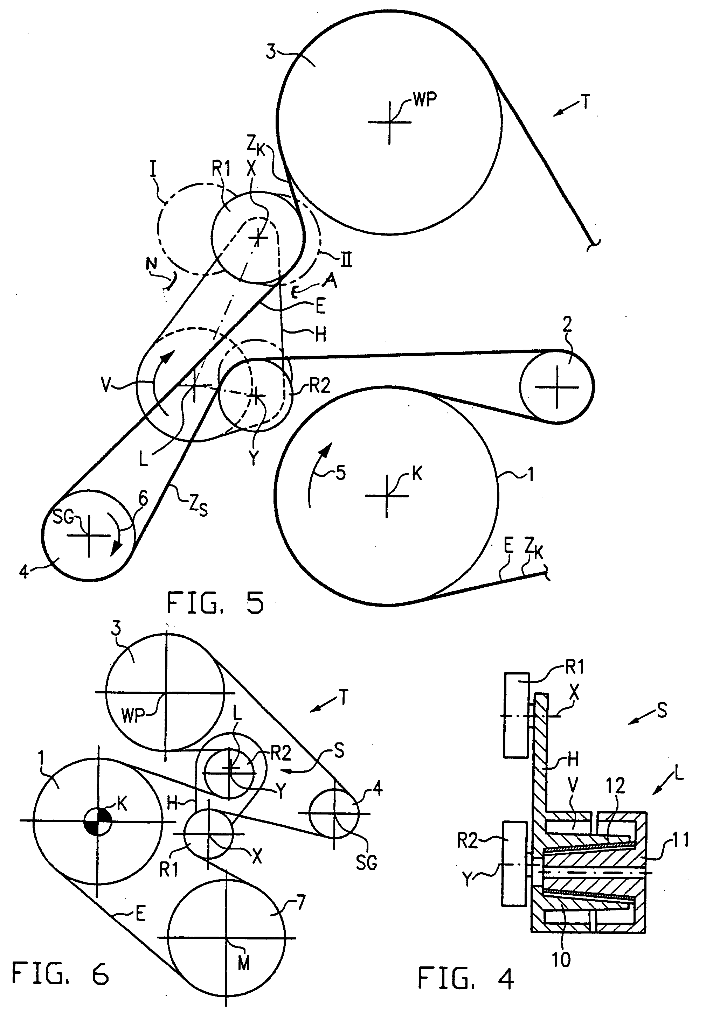

Im Schnitt der Fig. 4 ist erkennbar, dass die Achsen X, Y zueinander und zur durch die Schwenklagerung L definierten Achse des Spannarms H parallel sind. Der Spannarm H ist mit einer Buchse 10 auf einem Spannergehäuse 11 drehgelagert, wobei ein Spannarmlager 12 zwischengeschaltet ist. Die Federvorspannvorrichtung V kann in einem Hohlraum zwischen dem Spannergehäuse 11 und der Buchse 10 angeordnet sein. Das Spannarmlager 12 kann als bidirektionaler Rotationsdämpfer ausgebildet sein. Die Spannvorrichtung S ist zweckmäßigerweise an der Stirnseite des Verbrennungskraftmotors und in einem in Fig. 5 schematisch gezeigten Trieb T, hier einem Riementrieb, angebracht.

Der Trieb T in Fig. 5 weist mehrere Riemenscheiben und als diese verbindendes Antriebselement E einen Riemen auf. Eine Riemenscheibe 1 ist mit der Kurbelwelle K des Verbrennungskraftmotors verbunden, wobei deren Drehrichtung durch einen Pfeil 5 angedeutet ist. Um an der Riemenscheibe 1 einen starken Umschlingungswinkel zu erzielen, ist nahe der Riemenscheibe 1 eine Umlenkrolle 2 vorgesehen. Eine weitere Riemenscheibe 3 gehört beispielsweise zu einer Wasserpumpe WP, während eine weitere Riemenscheibe 4 zu dem Generator SG gehört, der mit einem Startantriebsmotor baulich vereinigt ist (Starter/Generator). Die Drehrichtung der Riemenscheibe 4 ist mit dem Pfeil 6 angedeutet. Im Antriebselemente E erstreckt sich bei treibender Kurbelwelle K die Zugtrumseite Z_{K} von der Unterseite der Riemenscheibe 1 bis zur Oberseite der Riemenscheibe 4. Treibt der aktivierte Startantriebsmotor des Starter/Generators SG, dann erstreckt sich die Zugtrumseite Z_{S} des Antriebselements von der Unterseite der Riemenscheibe 4 bis zur Oberseite 1.

Die Spannvorrichtung S ist so im Trieb D angeordnet, dass sich die Spannrolle R1 an der Zugtrumseite Z_{K} der treibenden Kurbelwelle K und die zweite Spannrolle R2 an der Zugtrumseite Z_{S} des treibenden Startantriebsmotors befinden, wobei das Antriebselement E beide Spannrollen R1, R2 in etwa gleich umschlingt. Der Spannarm H ist in Fig. 5 in ausgezogenen Linien in seiner Nominalstellung gezeigt. Er hat vorzugsweise einen begrenzten Gesamtschwenkwinkel, der durch die strichpunktierten Konturen der ersten Spannrolle R1 hervorgehoben ist. Dieser Gesamtschwenkwinkel, der beispielsweise etwa 30° beträgt, kann durch Anschläge, z.B. einen Montieranschlag N für eine Montierstellung 1 und einen Endanschlag A für eine Endstellung II begrenzt sein. Wird der Spannarm H in die Montierstellung I verbracht, dann ist das Antriebselement E ggf. so entspannt, dass es sich problemlos abnehmen läßt. Die Spannvorrichtung S in Fig. 5 entspricht im wesentlichen der der ersten Ausführungsform in Fig. 1.

In dem Trieb T in Fig. 6 entspricht die Spannvorrichtung S in etwa der der Ausführungsform der Fig. 2. im Trieb T in Fig. 6 ist eine andere Geometrie für den Verlauf des Antriebselements E gewählt. Von der im Uhrzeigersinn drehenden Riemenscheibe 1 der treibenden Kurbelwelle K wird das Antriebselement E über eine Riemenscheibe 7, beispielsweise eines Klimakompressors M, die erste Spannrolle R1 und die Riemenscheibe 4 des Starter/Generators SG gezogen (Zugtrumseite der treibenden Kurbelwelle K). Ist der Starter/Generator SG eingeschaltet, wird das Antriebselement E von der Riemenscheibe 4 über die Riemenscheibe 3, beispielsweise der Wasserpumpe WP, die zweite Spannrolle R2 und die Riemenscheibe 1 der Kurbelwelle K gezogen (Zugtrumseite des treibenden Startantriebsmotors). Der Spannarm H ist hängend montiert, wobei die Schwenklagerung L oben positioniert ist und die Achsen X, Y darunter liegen. Die Umschlingungswinkel an den Spannrollen R1, R2 sind in diesem Trieb T deutlich größer als im Trieb T der Fig. 5.

Bei einer konkreten Ausführungsform der Spannvorrichtung S ist der Hebelarm der ersten Spannrolle R1 ca. 88 mm lang, während der Hebelarm der zweiten Spannrolle R2 nur etwa 16 mm beträgt, so dass sich ein optimales Verhältnis von 5,5:1 ergibt. Wenn bei dieser Konfiguration die erste Spannrolle R1 eine Riemenlängung von 5,5 mm ausgleicht, bewegt sich die zweite Spannrolle R2 über ca. 1,0 mm, so dass tatsächlich etwa 4,5 mm nachgespannt werden.

Bei allen Ausführungsformen wird bei eingeschaltetem Startantriebsmotor die dann in das Antriebselement eingeleitete, hohe Leistung problemlos über die zweite Spannrolle R2 und ohne nennenswerten Schlupf des Antriebselements an der Riemenscheibe 4 oder der Riemenscheibe 1 übertragen, weil die zweite Spannrolle R2 dann durch die in das Antriebselement E gedrückte erste Spannrolle R1 abgestützt wird. Umgekehrt wird bei treibender Kurbelwelle K die erste Spannrolle R1 zusätzlich zur Federvorspannung von der Reaktionskraft der zweiten Spannrolle R2 unterstützt.

## Patentansprüche

1. Spannvorrichtung (S) für ein biegsames Antriebselement (E) wie einen Riemen oder eine Kette eines Riemenscheiben (1, 4) oder Kettenräder zumindest der Kurbelwelle (K) und eines baulich mit einem wahlweise aktivierbaren Startantriebsmotor kombinierten Generators (SG) eines Verbrennungskraftmotors verbindenden Triebs (T), mit ersten und zweiten, das Antriebselement (E) mit Vorspannung umlenkenden, in einer gemeinsamen Schwenklagerung (L) schwenkbaren Spannrollen (R1, R2), an denen Resultierende (F1, F2) der an die beiden Spannrollen abgegebenen Umlenkkräfte ein bezüglich der Schwenklagerung (L) gegensinniges Momentenpaar ergeben, wobei die zweite Spannrolle (R2) als Startspannrolle im Antriebselement (E) an der Zugtrumseite (Z_{S}) des aktivierten und die Kurbelwelle (K) schleppenden Generators (SG) und die erste Spannrolle (R1) im Antriebselement an der Zugtrumseite (Z_{K}) der den Generator (SG) treibenden Kurbelwelle (K) anordbar ist, **dadurch gekennzeichnet, dass** die ersten und zweiten Spannrollen (R1, R2) an einem gemeinsamen, in der Schwenklagerung (L) schwenkgelagerten Spannarm (H) angeordnet sind, und dass der Hebelarm (b) der zweiten Spannrolle (R2) bezüglich der Schwenklagerung (L) des Spannarms (H) kürzer ist als der Hebelarm (a) der ersten Spannrolle (R1).

2. Spannvorrichtung nach Anspruch 1, **dadurch gekennzeichnet, dass** die Achsen (X, Y) der ersten und zweiten Spannrollen (R1, R2) an derselben Seite der Schwenklagerung (L) angeordnet sind.

3. Spannvorrichtung nach Anspruch 1, **dadurch gekennzeichnet, dass** die Achsen (X, Y) der ersten und zweiten Spannrollen (R1, R2) an sich gegenüberliegenden Seiten der Schwenklagerung (L) angeordnet sind.

4. Spannvorrichtung nach Anspruch 1, **dadurch gekennzeichnet, dass** die Achsen (X, Y) der ersten und zweiten Spannrollen (R1, R2) auf einer durch die Schwenklagerung (L) gehenden Geraden angeordnet sind.

5. Spannvorrichtung nach Anspruch 3, **dadurch gekennzeichnet, dass** eine Verbindungslinie zwischen der Achse (X) der ersten Spannrolle (R1) und der Schwenklagerung (L) mit einer Verbindungslinie zwischen der an der gegenüberliegenden Seite der Schwenklagerung (L) positionierten Achse (Y) der zweiten Spannrolle (R2) und der Schwenklagerung (L) miteinander einen stumpfen Winkel <180° einschließt.

6. Spannvorrichtung nach Anspruch 1, **dadurch gekennzeichnet, dass** das Spannvermögen der ersten Spannrolle (R1) im Antriebselement (E) in Relation zum Spannvermögen der zweiten Spannrolle (R2) mindestens 4:1, vorzugsweise zwischen 4,5:1 und 6,5:1, vorzugsweise etwa 5,5:1, beträgt.

7. Spannvorrichtung nach Anspruch 1, **dadurch gekennzeichnet, dass** das Verhältnis zwischen dem Hebelarm (a) der ersten Spannrolle (R1) und dem Hebelarm (b) der zweiten Spannrolle (R2) mindestens 4:1, vorzugsweise etwa zwischen 4,5:1 und 6,5:1, vorzugsweise ca. 5,5:1, beträgt.

8. Spannvorrichtung nach wenigstens einem der vorhergehenden Ansprüche, **dadurch gekennzeichnet, dass** der Spannarm (H) in Schwenkrichtung der ersten Spannrolle (R1) zum Spannen des Antriebselements (E) im ersten Abschnitt durch Federkraft (V) vorgespannt ist.

9. Spannvorrichtung nach Anspruch 1, **dadurch gekennzeichnet, dass** in der Schwenklagerung (L) eine bidirektionale Rotationsdämpfung für den Spannarm (H) vorgesehen ist.

10. Spannvorrichtung nach Anspruch 1, **dadurch gekennzeichnet, dass** der Gesamtschwenkwinkel des Spannarms (H) aus einer Nominalstellung mit in etwa gleichen Umschlingungswinkeln an beiden Spannrollen (R1, R2) in beiden Schwenkrichtungen durch einen Endanschlag (A) und einen Montageanschlag (N) begrenzt wird, vorzugsweise auf ca. 30°.

## Claims

1. Tensioning device (S) for a flexible driving element (E) such as a belt or a chain of a driving system (T) connecting belt pulleys (1, 4) or chain wheels at least of the crankshaft (K) and of a generator (SG) of an internal combustion engine structurally combined with an optionally activatable starter driving engine, comprising first and second tension rollers (R1, R2) pivotable in a mutual drag bearing (L) and deflecting the driving element (E) with initial tension, on which resultants (F1, F2) of the deflection forces supplied to both tension rollers result in an opposite couple of forces in view of the drag bearing (L), wherein the second tension roller (R2) can be disposed as starter tension roller in the driving element (E) on the tensioned side of the belt (Z_{S}) of the activated generator (SG) dragging the crankshaft (K) and the first tension roller (R1) in the driving element on the tensioned side of the belt (Z_{K}) of the crankshaft (K) driving the generator (SG), **characterized in that** the first and second tension rollers (R1, R2) are disposed on a mutual tensioning arm (H) pivotably mounted in the drag bearing (L) and that the lever arm (b) of the second tension roller (R2) is shorter than the lever arm (a) of the first tension roller (R1) with respect to the drag bearing (L) of the tensioning arm (H).

2. Tensioning device according to claim 1, **characterized in that** the axes (X, Y) of the first and second tension rollers (R1, R2) are disposed on the same side of the drag bearing (L).

3. Tensioning device according to claim 1, **characterized in that** the axes (X, Y) of the first and second tension rollers (R1, R2) are disposed on opposite sides of the drag bearing (L).

4. Tensioning device according to claim 1, **characterized in that** the axes (X, Y) of the first and second tension rollers (R1, R2) are disposed on a straight line passing through the drag bearing (L).

5. Tensioning device according to claim 3, **characterized in that** a connecting line between the axis (X) of the first tension roller (R1) and the drag bearing (L) with a connecting line between the axis (Y) of the second tension roller (R2) positioned on the opposite side of the drag bearing (L) and the drag bearing (L) together enclose an obtuse angle < 180°.

6. Tensioning device according to claim 1, **characterized in that** the tensioning capacity of the first tension roller (R1) in the driving element (E) in relation to the tensioning capacity of the second tension roller (R2) is at least 4:1, preferably between 4.5:1 and 6.5:1, preferably approximately 5.5:1.

7. Tensioning device according to claim 1, **characterized in that** that the ratio between the lever arm (a) of the first tension roller (R1) and the lever arm (b) of the second tension roller (R2) is at least 4:1, preferably approximately between 4.5:1 and 6.5:1, preferably approximately 5.5:1.

8. Tensioning device according to at least one of the preceding claims, **characterized in that** the tensioning arm (H) is provided with initial tension by a spring force (V) in the first section in a pivoting direction of the first tension roller (R1) for tensioning the driving element (E).

9. Tensioning device according to claim 1, **characterized in that** a bi-directional rotational absorption for the tensioning arm (H) is provided in the drag bearing (L).

10. Tensioning device according to claim 1, **characterized in that** the overall pivoting angle of the tensioning arm (H) from a nominal position is limited with approximately identical wraps on both tension rollers (R1, R2) in both pivoting directions by a maximum stop (A) and a mounted stop (N), preferably to approximately 30°.

## Revendications

1. Dispositif tendeur (S) pour élément d'entraînement flexible (E) tel qu'une courroie ou une chaîne d'un entraînement (T) reliant des poulies à courroie (1, 4) ou des roues à chaîne au moins de l'arbre à manivelle (K) et d'un générateur (SG), structurellement combiné à un moteur d'entraînement de démarrage pouvant être activé à la demande, d'un moteur à combustion interne, lequel dispositif de tension comporte des première et deuxième roues tendeuses (R1, R2) qui dévient l'élément d'entraînement (E) avec une précontrainte, qui sont aptes à pivoter dans un palier (L) commun et au niveau desquelles les résultantes (F1, F2) des forces de déviation exercées sur les deux roues tendeuses génèrent une paire de moments de sens opposés par rapport au palier (L),
la deuxième roue tendeuse (R2) étant agencée en tant que roue tendeuse de démarrage dans l'élément d'entraînement (E) du côté du brin de traction (Zs) du générateur (SG) activé et entraînant l'arbre à manivelle (K), et la première roue tendeuse (R1) étant agencée dans l'élément d'entraînement du côté du brin de traction (Zk) de l'arbre à manivelle (K) entraînant le générateur (SG),
**caractérisé en ce que** les première et deuxième roues tendeuses (R1, R2) sont agencées sur un bras tendeur commun (H) monté à pivotement dans le palier (L), et **en ce que** le bras de levier (b) de la deuxième roue tendeuse (R2), relativement au palier (L) du bras tendeur (H), est plus court que le bras de levier (a) de la première roue tendeuse (R1).

2. Dispositif tendeur selon la revendication 1, **caractérisé en ce que** les axes (X, Y) des première et deuxième roues tendeuses (R1, R2) sont agencés du même côté du palier (L).

3. Dispositif tendeur selon la revendication 1, **caractérisé en ce que** les axes (X, Y) des première et deuxième roues tendeuses (R1, R2) sont placés sur des côtés opposés du palier (L).

4. Dispositif tendeur selon la revendication 1, **caractérisé en ce que** les axes (X, Y) des première et deuxième roues tendeuses (R1, R2) sont placés sur une droite passant par le palier.

5. Dispositif tendeur selon la revendication 3, **caractérisé en ce qu'**une ligne de liaison, entre l'axe (X) de la première roue tendeuse (R1) et le palier (L), et une ligne de liaison, entre l'axe (Y) de la deuxième roue tendeuse (R2), qui est positionné du côté opposé du palier (L), et le palier (L), forment entre elles un angle obtus inférieur à 180°.

6. Dispositif tendeur selon la revendication 1, **caractérisé en ce que** le rapport entre la tension exercée par la première roue tendeuse (R1) dans l'élément d'entraînement (E) et la tension exercée par la deuxième roue tendeuse (R2) est au moins de 4:1, avantageusement entre 4,5:1 et 6,5:1, et de préférence encore d'environ 5,5:1.

7. Dispositif tendeur selon la revendication 1, **caractérisé en ce que** le rapport entre le bras de levier (a) de la première roue tendeuse (R1) et le bras de levier (b) de la deuxième roue tendeuse (R2) est au moins de 4:1, avantageusement entre 4,5:1 et 6,5:1 environ, et de préférence encore d'environ 5,5 :1.

8. Dispositif tendeur selon au moins l'une des revendications précédentes, **caractérisé en ce que** le bras tendeur (H) est précontraint dans une première portion par une force élastique (V), dans le sens de pivotement de la première roue tendeuse (R1), en vue de tendre l'élément d'entraînement (E).

9. Dispositif tendeur selon la revendication 1, **caractérisé en ce qu'**il est prévu dans le palier (L) un amortissement de rotation bidirectionnel pour le bras tendeur (H).

10. Dispositif tendeur selon la revendication 1, **caractérisé en ce que**, à partir de la position nominale avec des angles de contact sensiblement égaux au niveau des deux roues tendeuses (R1, R2), l'angle de pivotement total du bras tendeur (H) est limité, avantageusement à 30° environ, dans les deux sens de pivotement, par une butée d'extrémité (A) et une butée de montage (N).
